# EUROPEAN PATENT APPLICATION

(11) **EP 2 149 420 A1**
(43) Date of publication of application: **03.02.2010**
(21) Application number: 09425286.3
(22) Date of filing: 16.07.2009
(51) Int. Cl.: B23K 26/08, B23K 26/38

(54) **Process and apparatus for low-thermal-shock precision laser drilling with inclination of laser beam and rotation/translation of the workpiece**

(30) Priority: 31.07.2008 IT BO20080481
(71) Applicant: Quadrana, Marcello, 40069 Zola Predosa (BO) (IT)
(72) Inventor: Quadrana, Marcello, 40069 Zola Predosa (BO) (IT)
(74) Representative: Trentini, Ermanno

(57) **Abstract**

The invention relates to a laser micro-drilling process and apparatus for the implementation thereof, capable of drilling high-precision holes with a low thermal gradient by exploiting only a portion of the laser beam (3), which, suitably inclined, continuously varies the point of contact with the surface of the hole, fashioned in a metal plate that is made to rotate by the workpiece holder of the apparatus (1).

## Description

The present industrial invention relates to a laser apparatus specifically for drilling, composed of a traditional beam generator and a workpiece positioner which, in addition to the customary movements, is endowed with rotational motion around the vertical axis.

With particular reference to apparatus of this kind commercially available today, we may affirm that there are two machining methods employed; the first, called percussion drilling, is **characterised in that** the laser beam is kept centred on the hole, whereas the second, called trepanning or ablation, is characterised by the possibility of focusing the beam on points other than the centre using lenses and mirrors. Both these techniques present drawbacks, despite always achieving very high degrees of machining. In the case of percussion drilling in deep holes, i.e. whose depth is equivalent to around ten times the hole diameter, major deformations occur due to focusing problems, the focal point being notoriously very small and short.

This produces dimensional deformations and the machining quality is compromised in a random manner by the uncontrollable energy distribution in the crucible that is generated by the impact of the beam.

In addition to this.a transformation is produced in the metallographic structure of the workpiece.
In the case of trepanning, the thermal shock decreases and the machining precision increases; however, there exist other problems as regards timing and the drilling of holes with a high diameter/depth ratio, again tied to focusing problems.

The principal object of the present invention is to overcome such limitations by devising a third machining method that provides for the drilling of a pre-hole having a much smaller diameter than the nominal diameter, resulting in a reduction in thermal shock when the preparatory pre-drilling is executed with low-energy, low-frequency laser; when the hole is finished, and without discontinuity, the X axis shifts in direction and height accordingly until completing the diameter by skimming over the whole length of the hole with one side of the beam and ablating microscopic particles. The result is a drastic reduction in thermal shock, considerable increase in precision and a noteworthy improvement in surface roughness.

These and other objects are achieved by the device according to the invention, which is **characterised in that** it is essentially composed of a suitably steerable YAG type laser generator laser and a workpiece holder connected thereto, which besides being able to translate along the X,Y and Z axes is endowed with rotational motion around the Z axis.

These and other characteristics will now become more apparent from the description of a simple embodiment of the invention, given solely by way of example without restricting the scope of the present patent.

With reference to the appended drawings, wherein:
Figs. 1,2
   Illustrate a laser head traditionally positioned on axis, and a second head suitably inclined according to the invention.
Figs. 3,4
   Illustrate the workpiece holder viewed from the front and from above.
Figs. 5,6
   Illustrate the invention installed in place, and the plate, site of the hole to be drilled, viewed from above.

With reference to said figures, 1 indicates the traditional-type beam generator, 2 the laser beam, α the angle by which the generator is inclined relative to the vertical axis so that the outer portion 3 of the beam comes into contact with the surface of the pre-hole 4, and 5 the finished hole. 6 indicates the workpiece holder able to translate along the X,Y and Z axes and rotate around the Z axis, moved by the motor drives 7, and 8 the device for locking the workpiece 9 in place. 9',9",9"' indicate the sequence of phases in the drilling of the workpiece (9): simple rotation; start of drilling with a portion of laser (3) in contact with the hole (5) and progressive translation along the X and Z axes; finished hole (5).

In practice the construction details, dimensions, materials, shape and other aspects of the invention may vary without departing from the scope of the present industrial patent; in fact, the invention thus conceived lends itself to numerous adaptations and variant embodiments, all falling within the realm of the inventive concept. In addition, all the elements may be replaced by other technically equivalent ones.

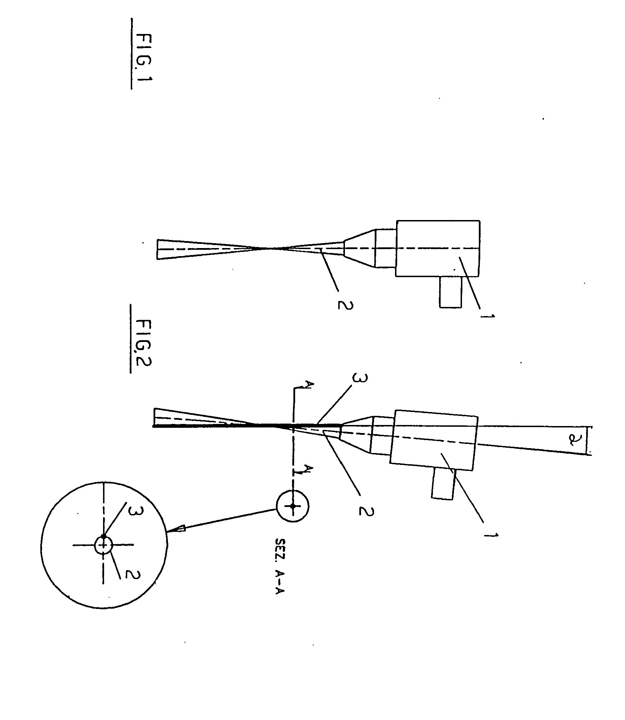

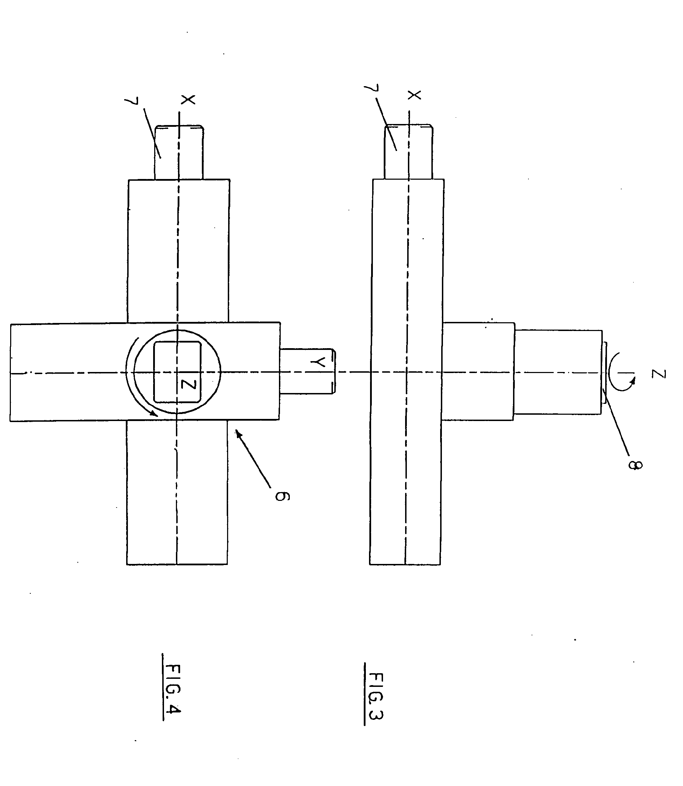

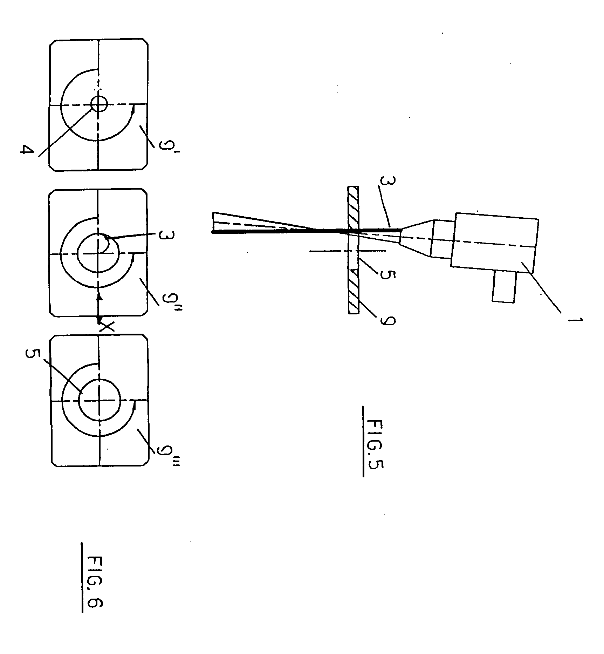

## Claims

1. PROCESS AND APPARATUS FOR LOW-THERMAL-SHOCK PRECISION LASER DRILLING
Process for drilling precision holes by laser comprising an initial preparatory pre-drilling that may be executed with low-energy, low-frequency laser, followed by a final drilling until the nominal hole diameter is reached, **characterized in that** the beam is inclined in relation to the central axis of the hole drilled in the workpiece, which is made to rotate.

2. PROCESS AND APPARATUS FOR LOW-THERMAL-SHOCK PRECISION LASER DRILLING
Apparatus for implementing the process according to the first claim, **characterized in that** the generator (1) of the beam (2) is inclined by an angle (α) in relation to the vertical axis, so that only the zone (3) of the beam comes into contact with the edge of the hole drilled in the metal workpiece (9), skimming along the entire length thereof, further **characterized in that** the plate (9) mounted on the workpiece holder (8)can be translated, without discontinuity, along the axis (X) and its position varied along the axis (Z) in order finally to reach the nominal diameter (5) of the hole.

3. PROCESS AND APPARATUS FOR LOW-THERMAL-SHOCK PRECISION LASER DRILLING
Apparatus according to the previous claim, **characterized in that** the axis (Z) of the workpiece holder (6) is enabled to rotate and is thus able to impart an adequate number of revolutions to the plate (9), site of the hole (5), in such a manner that the zone (3) of the beam continually varies the point of contact with the surface of the hole being drilled.
